# EUROPEAN PATENT APPLICATION

(11) **EP 4 613 442 A1**
(43) Date of publication of application: **10.09.2025**
(21) Application number: 25153948.2
(22) Date of filing: 24.01.2025
(51) Int. Cl.: B25J 9/16, G06N 3/008

(54) **CONTROL DEVICE, CONTROL METHOD, AND PROGRAM**

(30) Priority: 04.03.2024 JP 2024032131
(71) Applicant: Hitachi, Ltd., Tokyo 100-8280 (JP)
(72) Inventor: ESAKI, Kanako, Tokyo, 100-8280 (JP); MATSUMURA, Tadayuki, Tokyo, 100-8280 (JP); KATO, Takeshi, Tokyo, 100-8280 (JP); MIZUNO, Hiroyuki, Tokyo, 100-8280 (JP); MINE, Ryuji, Tokyo, 100-8280 (JP); KUDO, Yasuyuki, Tokyo, 100-8280 (JP); MINUSA, Shunsuke, Tokyo, 100-8280 (JP)
(74) Representative: Mewburn Ellis LLP

(57) **Abstract**

There is provided a control device including: a self-region estimation unit configured to estimate a self-region of a partner based on preference information indicating an observation that the partner is estimated to expect for a control target and the partner, the preference information being derived based on a predetermined principle and observation sensor data acquired from the partner and the control target, the partner being a person or an autonomous system, and the control target being an autonomous system; a self-region determination unit configured to determine a self-region of the control target based on preference information indicating an observation that the control target expects for the partner and the control target, which is derived based on the predetermined principle, using the self-region of the partner and an intention of the control target; and an action generation unit configured to generate action information for controlling an action of the control target based on the self-region of the control target, thereby controlling an operation of the control target.

## Description

### BACKGROUND OF THE INVENTION

### 1. Field of the Invention

The present invention relates to control devices, control methods, and programs.

### 2. Description of the Related Art

In recent years, there have been increasing expectations for autonomous systems such as robots, as presences complementing human labor. For example, there have been social requirements for complementing human labor by robots in various fields, such as carrying an object to a goal place in cooperation with a person or raising a person from a bed as nursing care.

In order for an autonomous system such as a robot to achieve a goal in cooperation with a person, it is considered to be important that the robot itself performs not only passive actions meeting expectations of the person but also assertive actions including active actions. However, conventional robots have been mainly performing passive actions and, therefore, there is a problem of controlling assertive actions of robots.

Incidentally, JP 2019 -84641 A discloses a technique relating to control of an autonomous mobile robot. Specifically, the same literature describes that "an autonomous mobile robot avoids interference with a human, based on the result of detection of movement information about a human existing therearound, through motion control by a control device. Further, in a case where there is a possibility of interference between the robot and a human in the future, the control device estimates the degree of recognition of the robot from the human, selects an approach to the human for avoiding the interference according to the degree of recognition, and gives an operation instruction to the robot. Furthermore, based on a reaction of the human to the approach performed in the previous stage, the control device controls the operation of the robot so as to perform an approach different from that in the previous stage, as necessary."

### SUMMARY OF THE INVENTION

In order to realize an assertive action of a robot, it is considered to be important to determine a self-region of the robot in consideration of both a self-region of a person and an intention of the robot, with respect to a goal to be achieved by cooperation between the robot and the person.

On the other hand, in the technique of JP 2019 - 84641 A, although the degree of recognition of the robot from the person is estimated, the self-region of the person, the intention of the robot, and the like are not considered. Therefore, it is considered to be difficult to solve the problem of realizing an assertive action of the robot, with the technique of JP 2019 -84641 A.

The present invention has been made in view of the aforementioned problem, and aims at controlling an autonomous system such that the autonomous system can perform an assertive action.

The present application includes a plurality of means for solving at least a part of the aforementioned problem, and an example thereof is as follows. A control device in an aspect of the present invention for solving the aforementioned problem includes: a self-region estimation unit configured to estimate a self-region of a partner based on preference information indicating an observation that the partner is estimated to expect for a control target and the partner, the preference information being derived based on a predetermined principle and observation sensor data acquired from the partner and the control target, the partner being a person or an autonomous system including a robot, and the control target being an autonomous system including a robot; a self-region determination unit configured to determine a self-region of the control target based on preference information indicating an observation that the control target expects for the partner and the control target, which is derived based on the predetermined principle, using the self-region of the partner and an intention of the control target as a goal to be achieved by cooperation between the partner and the control target; and an action generation unit configured to generate action information for controlling an action of the control target based on the self-region of the control target, and to control a driving device for the control target using the action information, thereby controlling an operation of the control target.

According to the present invention, it is possible to control the autonomous system such that the autonomous system can perform an assertive action.

Further, problems, structures, effects and the like other than those described above will be clarified by the following description of embodiments.

### BRIEF DESCRIPTION OF THE DRAWINGS

Fig. 1 is a diagram illustrating an example of a schematic structure of a control device according to a first embodiment;
Fig. 2 is a view illustrating the concept of a self-region;
Fig. 3A is a view illustrating a specific example of a goal; Fig. 3B is a view illustrating an example of a distribution of actions;
Fig. 4A is a view illustrating an example of observation sensor data regarding an operation of a hand of a robot;
Fig. 4B is a view illustrating an example of observation sensor data regarding a motion of a hand of the person;
Figs. 5A and 5B are views illustrating an example of person's preference distributions for observations, which are estimated by a control device;
Figs. 6A and 6B are views illustrating an example of robot's preference distributions for observations, which are estimated by the control device;
Figs. 7A and 7B are views illustrating the relationship between observations and preference distributions of the person;
Figs. 8A and 8B are views illustrating the relationship between observations and preference distributions of the robot;
Fig. 9 is a flowchart illustrating an example of control processing according to a first embodiment;
Fig. 10 is an explanatory view of a first modification;
Fig. 11 is a view illustrating an example of a schematic structure of a control device according to a second embodiment;
Fig. 12 is a view illustrating an example of a schematic structure of a control device according to a third embodiment;
Fig. 13 is a flowchart illustrating an example of control processing according to the third embodiment;
Fig. 14 is a view illustrating an example of a schematic structure of a control device according to a fourth embodiment;
Fig. 15 is a flowchart illustrating an example of control processing according to the fourth embodiment; and
Fig. 16 is a diagram illustrating an example of a hardware structure of the control device.

### DESCRIPTION OF THE PREFERRED EMBODIMENTS

Hereinafter, respective embodiments of the present invention will be described with reference to the drawings.

### [First Embodiment]

### <Schematic Structure of Control Device 100>

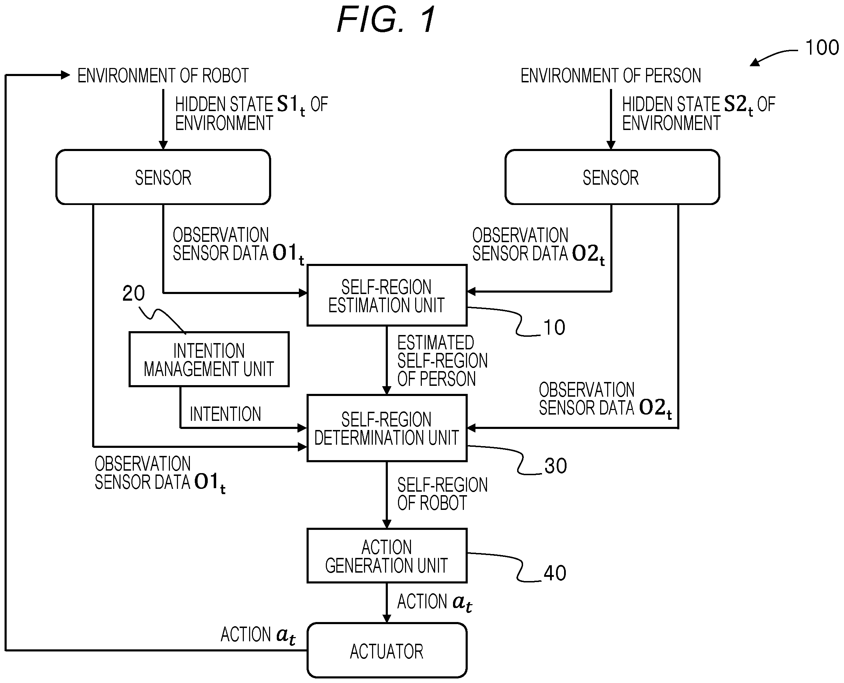

Fig. 1 is a diagram illustrating an example of an outline of a control device 100 according to the present embodiment. The control device 100 is a device for controlling the operation of an autonomous system. The following embodiments including the present embodiment will be described by exemplifying control of a robot as one of autonomous systems.

The control device 100 estimates a self-region of a person, using observation sensor data resulted from observations of motions of the robot and the person. Further, the control device 100 determines a self-region of the robot in consideration of both the estimated self-region of the person and an intention of the robot corresponding to a goal to be achieved by cooperation between the robot and the person.

Further, the control device 100 generates action information for controlling the operation of the robot, based on the determined self-region of the robot. Furthermore, the control device 100 controls a driving device (driving mechanism) for the robot such as an actuator, based on the generated action information.

Incidentally, the control device 100 may either exist as an independent-type device different from the robot, which is a device to be controlled, or be in the form of being mounted on the robot. Further, in the case of an independent type, the control device 100 communicates information to and from sensors and the robot through a predetermined network such as the Internet, a local area network (LAN), or a wide area network (WAN), for example, thereby acquiring observation sensor data and controlling the operation of the robot based on action information.

With the control device as described above, it is possible to control the autonomous system such that the autonomous system can cooperate with a first-time partner and can perform assertive actions. In particular, the control device determines a self-region of the person with respect to a goal to be achieved by cooperation between the robot and the person, and determines a self-region of the robot based on the self-region of the person and an intention of the robot. Accordingly, the control device can control the operation of the robot such that the robot can perform not only passive actions meeting expectations of the partner (person) but also assertive actions including active actions.

### <Regarding Self-region>

Here, the self-region will be described.

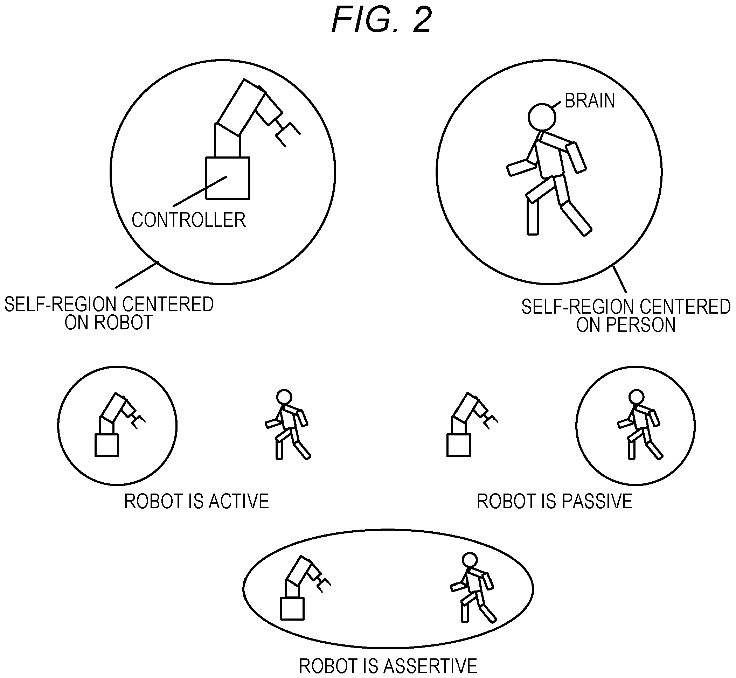

Fig. 2 is a view illustrating the concept of a self-region. One self-region is set for each subject of an action. In the case of a person, the subject of an action is the brain of the person. Thus, for one person who acts through an output of the brain, a "self-region centered on the person" is set. The control device 100 estimates, as the self-region of the person, preferences of observations that the person is estimated to expect for the robot and the person himself/herself, with respect to a goal to be achieved by cooperation between the robot and the person.

Further, in the case of the robot, the subject of an action is a controller for the robot (corresponding to the control device 100 according to the present embodiment). Thus, for the one robot that acts according to an output of the controller, a "self-region centered on the robot" is set. The control device 100 determines, as the self-region of the robot, preferences of observations that the robot expects for the person and the robot itself, in consideration of both the self-region of the person and an intention of the robot corresponding to a goal to be achieved by cooperation between the robot and the person.

Incidentally, the self-region is not necessarily coincident with a physical region of the robot or the person. If an action of the robot is determined based on only an intention of the robot, the robot is active, and the self-region centered on the robot includes only observations regarding the robot. On the other hand, in a case where an action of the robot is determined based on only the self-region centered on the person, the robot is passive, and the self-region centered on the robot includes only observations regarding the person.

The control device 100 according to the present embodiment controls the robot such that the robot can perform not only passive actions but also assertive actions including active actions, based on the self-region of the robot determined in consideration of both the self-region of the person and an intention of the robot.

### <Functional Structure of Control Device 100>

As illustrated in Fig. 1, the control device 100 includes a self-region estimation unit 10, an intention management unit 20, a self-region determination unit 30, and an action generation unit 40, as individual functional units for executing various processes relating to control of the robot.

The self-region estimation unit 10 is a functional unit for estimating a self-region of a partner (person). The self-region estimation unit 10 acquires observation sensor data regarding the operation of the robot and the motion of the person from sensors, and estimates the self-region of the person using the observation sensor data. Incidentally, the sensors correspond to, for example, various sensors such as a sensor capable of observing the position, the orientation, the amount of movement, and the like of an arm of the robot, a camera capable of photographing motions of the person and an object, and a light detection and ranging (LiDAR) capable of observing the distance from the person or the object to the robot.

The self-region estimation unit 10 estimates a self-region of the person, based on the observation sensor data acquired from the sensors, and a free energy principle (FEP) which is an example of a predetermined principle. For example, the self-region estimation unit 10 inputs the observation sensor data to a generative model of the free energy principle to obtain an output of preference distributions indicating observations that the person is estimated to expect for the robot and the person himself or herself. Thus, the self-region estimation unit 10 estimates the preference distributions as the self-region of the person. Here, the preference distributions have been described as an example of preference information.

Here, the free energy principle is a hypothesis of a unified explanation principle for the brain function of an autonomous agent such as an organism, and is a known theory defining that perception, behavior, and the like of a human are determined so as to minimize a cost function called variational free energy.

Furthermore, the generative model of the free energy principle is an information model that estimates perception, behavior, and the like of the person or the robot, based on the free energy principle, and is expressed in the form of linear algebra (a matrix) in a discrete space. Further, inputting the observation sensor data to the generative model to obtain an output of a preference distribution means updating the components corresponding to the observation sensor data, out of the components of the generative model (the elements of the matrix), using the values of the observation sensor data, to obtain the values of the components corresponding to the preference distributions of the person which are determined at that time.

Incidentally, the generative model is preliminarily provided, as variables, with states (hidden states) corresponding to respective stages until achievement of goals, in the environment where the robot and the person is placed, according to various goals (for example, carrying an object to a goal place, raising a person from a bed as nursing care, and the like) to be achieved by cooperation between the robot and the person. For example, in a case of a goal of carrying an object to a goal place, the generative model is provided, as variables, with states of respective stages, such as "a state of grasping the object at a start position", "a state of releasing the object at an intermediate position", and "a state of releasing the object at an end position".

Further, for each goal, the generative model is provided, as parameters, with various types of information (for example, the arm length, the number of joints, the weight, and the type of the hand of the robot, the number of persons, and the like) about the person and the robot to be operated.

Incidentally, rather than separately dividing the processing performed by the self-region estimation unit 10 and the processing by the generative model of the free energy principle, the self-region estimation unit 10 may be considered to be a subject that executes the processing by the generative model of the free energy principle. Namely, it may be considered that the self-region estimation unit 10 calculates preference distributions of the person (preference distributions indicating observations that the person is estimated to expect for the robot and the person himself/herself), based on the observation sensor data and the free energy principle, and the self-region estimation unit 10 estimates the preference distributions as the self-region of the person.

The intention management unit 20 is a functional unit for managing an intention of the robot, namely a goal to be achieved by the cooperation between the robot and the person. Specifically, the intention management unit 20 stores various goals, such as carrying an object to a target place, raising a person from a bed as nursing care, and merging an automatic driving vehicle into a main line at a merging point, for example, as intentions of the robot.

The self-region determination unit 30 is a functional unit for determining a self-region of the robot. Specifically, the self-region determination unit 30 inputs the estimated self-region of the person (the preference distributions indicating the self-region of the person) and an intention of the robot managed by the intention management unit 20 to a generative model of the free energy principle corresponding to a predetermined goal, thereby obtaining preference distributions of the robot (preference distributions indicating observations that the robot expects for the person and the robot itself) in consideration of both the self-region of the person and the intention of the robot. Furthermore, the self-region determination unit 30 determines the preference distributions of the robot as the self-region of the robot.

Incidentally, inputting the estimated self-region of the person and an intention of the robot to the generative model to obtain preference distributions of the robot means updating the respective values of the components corresponding to respective items, out of the components of the generative model (the elements of the matrix), to obtain the values of the components corresponding to the preference distributions of the robot which are determined at that time.

Furthermore, rather than separately dividing the processing performed by the self-region determination unit 30 and the processing by the generative model of the free energy principle, the self-region determination unit 30 may be considered to be a subject that executes the processing by the generative model of the free energy principle. Namely, it may be considered that the self-region determination unit 30 calculates preference distributions of the robot (preference distributions indicating observations that the robot expects for the person and the robot itself), based on the estimated self-region of the person, the intention of the robot, and the free energy principle, and the self-region determination unit 30 determines the preference distributions as the self-region of the robot.

The action generation unit 40 is a functional unit for generating action information as an operation of the robot. Specifically, the action generation unit 40 generates action information for controlling the operation of the robot, based on the determined self-region of the robot. Further, the action generation unit 40 controls the operation of a driving device (driving mechanism) for the robot, such as an actuator, using the generated action information.

Incidentally, when generating action information, the action generation unit 40 considers the observations of the robot and the person (for example, the position of the hand of the robot, the position of a hand of the person, and the like at that time) identified by the observation sensor data acquired from the sensors. For example, in a case where the action information based on the determined self-region of the robot indicates grasping an object at a point A, if the hand of the robot is at a point B at that time point, the action generation unit 40 simultaneously generates action information indicating moving the hand from the point B to the point A for controlling the robot.

Incidentally, the action generation unit 40 may generate display information indicating the estimated self-region of the person and the determined self-region of the robot, and may output the display information to a predetermined display device (for example, a display device which is mounted on the robot and can be visually recognized by the person, or the like).

The functional structure of the control device 100 has been described above.

### <Description of Self-region of Partner (Person) and Self-region of Robot>

Next, the self-region of the person and the self-region of the robot will be described with a specific example of a goal to be achieved by cooperation between the robot and the person.

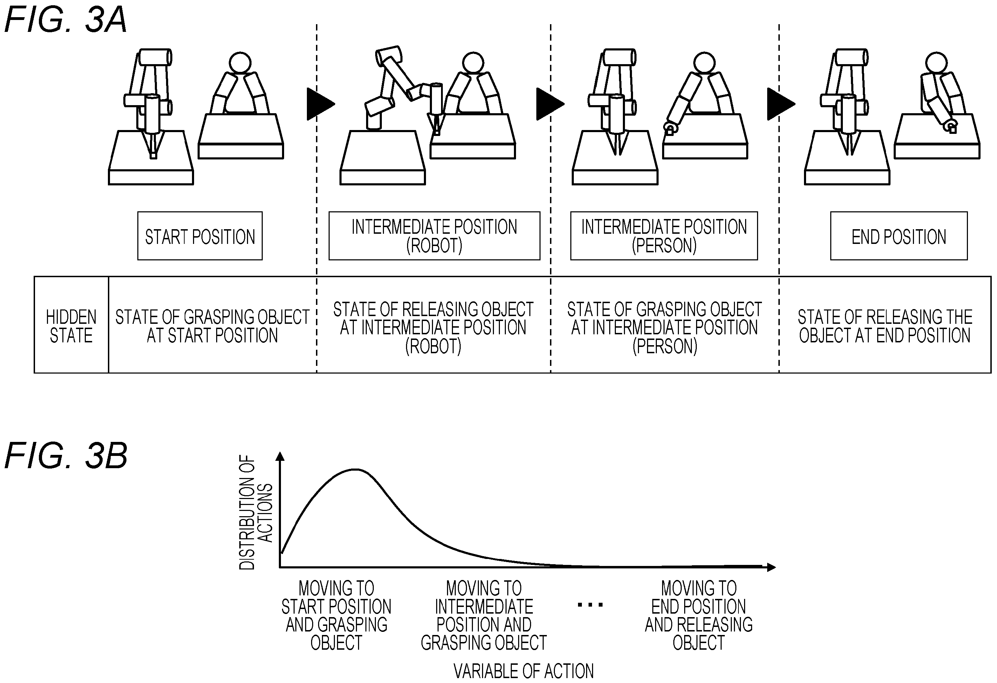

Fig. 3 (Fig. 3A) is a view illustrating a specific example of a goal. Fig. 3B is a view illustrating an example of a distribution of actions; The example illustrated in Fig. 3A illustrates an assumption that the robot wants to carry an object to an end position, but the end position is outside the reach range of the robot and, therefore, the robot and the person work in cooperation with each other, in order to achieve the goal of "carrying the object from the start position to the end position". Specifically, in this assumption, a cooperative work is performed such that the robot carries the object from the start position to an intermediate position, and the person carries the object from the intermediate position to the end position.

Incidentally, in the illustrated example, in the work of carrying the object at the start position to the end position, it is assumed that there are hidden states such as "a state of grasping the object at the start position", "a state of releasing the object at the intermediate position (the robot)", "a state of grasping the object at the intermediate position (the person)", and "a state of releasing the object at the end position", in the environment where the robot and the person are placed. However, the hidden states are not limited thereto and, for example, a series of works may be divided into finer states, and each of the states may be defined as a hidden state and as a variable in the generative model of the free energy principle. Further, actions for transitioning between these hidden states are, for example, "moving to the start position and grasping the object", "moving to the intermediate position and releasing the object", "moving to the intermediate position and grasping the object", and "moving to the end position and releasing the object", as illustrated in Fig. 3B.

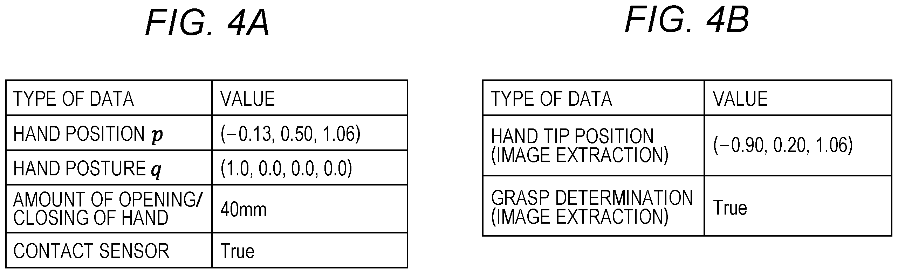

Figs. 4A and 4B are views illustrating examples of observation sensor data. Fig. 4A is a view illustrating an example of observation sensor data regarding the operation of the hand of the robot. Specifically, the observation sensor data includes observation sensor data regarding a hand position, a hand posture, an amount of opening/closing of the hand, and a contact sensor (indicating whether or not the hand is being in contact with the object). Fig. 4B is a view illustrating an example of observation sensor data regarding the motion of a hand of the person. Specifically, the observation sensor data includes observation sensor data regarding the position of the hand and grasp determination. Incidentally, the observation sensor data regarding the hand of the person is based on, for example, a result of image analysis of the position and the motion of the hand of the person photographed by a camera attached to the robot.

In the assumption as illustrated in Figs. 3A and 3B, the self-region estimation unit 10 inputs the observation sensor data illustrated in Figs. 4A and 4B to the generative model of the free energy principle, thereby obtaining an output of a preference distribution indicating observations that the person is estimated to expect for the robot or the person himself or herself.

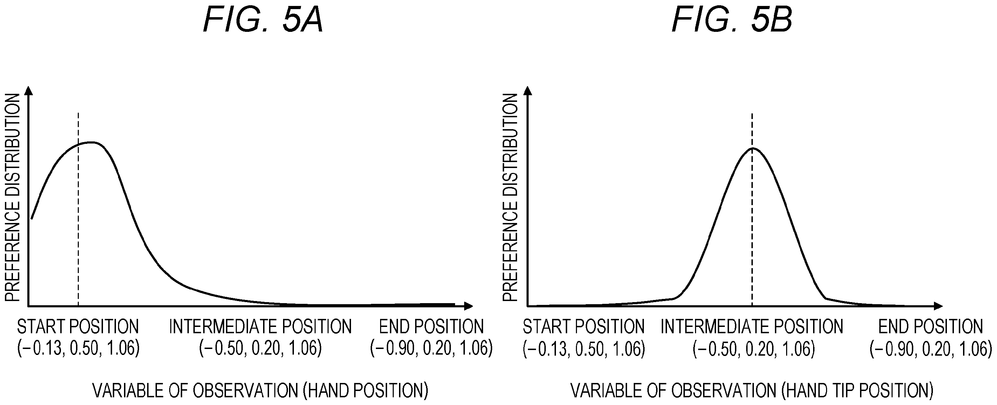

Figs. 5A and 5B are views illustrating an example of person's preference (desire/expectation) distributions for observations, which are estimated by the control device 100 (or the robot). Specifically, Fig. 5A illustrates a preference distribution regarding the hand position, which the control device 100 (the robot) estimates that "the person desires for the robot". Fig. 5B illustrates a preference distribution regarding the hand tip position, which the control device 100 (the robot) estimates that "the person desires for the person himself or herself".

More specifically, the preference distribution in Fig. 5A indicates that the control device 100 (the robot) estimates that the person desires the position of the hand of the robot to "be at the start position (-0.13,0.50, 1.06)", since there is a peak at the observation at "the start position (-0.13,0.50, 1.06)". Further, the preference distribution in Fig. 5B indicates that the control device 100 (the robot) estimates that the person desires the position of the hand tip of the person to "be at an intermediate position (-0.50,0.20, 1.06)", since there is a peak at the observation at "the intermediate position (-0.50,0.20, 1.06)".

The self-region estimation unit 10 estimates these preference distributions as the self-region of the person.

Furthermore, in the assumption as illustrated in Figs. 3A and 3B, the self-region determination unit 30 inputs the self-region of the person (the preference distributions) illustrated in Figs. 5A and 5B, and the intention of the robot (the intention of "carrying the object from the start position to the end position" in this case) managed by the intention management unit 20 to the generative model of the free energy principle, thereby obtaining an output of a preference distribution of the robot (a preference distribution indicating observations that the robot expects for the person or the robot itself) in consideration of both the self-region of the person and the intention of the robot.

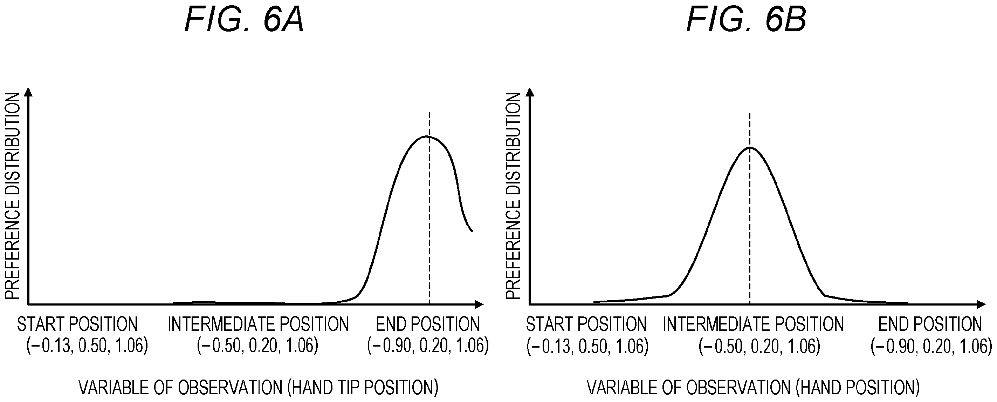

Figs. 6A and 6B are views illustrating an example of robot's preference (desire/expectation) distributions for observations, which are estimated by the control device 100 (or the robot). Specifically, Fig. 6A illustrates a preference distribution regarding the hand tip position, which the control device 100 (the robot) estimates that "the robot desires for the person". Further, Fig. 6B illustrates a preference distribution regarding the hand position, which the control device 100 (the robot) estimates that "the robot desires for the robot itself". More specifically, the preference distribution in Fig. 6A indicates that the robot desires the position of the hand tip of the person to "be at the end position (-0.90,0.20, 1.06)", since there is a peak at the observation at "the end position (-0.90,0.20, 1.06)". Further, the preference distribution in Fig. 6B indicates that the robot desires the position of the hand of the robot to "be at the intermediate position (-0.50,0.20, 1.06)", since there is a peak at the observation at "the intermediate position (-0.50,0.20, 1.06)". Although Figs. 5A, 5B, 6A and 6B illustrate the preference distributions for observations regarding the position of the hand tip of the person and the position of the hand of the robot, the control device 100 outputs preference distributions regarding all the observation items (the hand posture, the amount of opening/closing of the hand, the contact sensor, the grasp determination, and the like) as illustrated in Figs. 4A and 4B.

The self-region determination unit 30 determines these preference distributions as the self-region of the robot.

Next, there will be described a case where the self-region estimation unit 10 calculates preference distributions indicating observations that the person is estimated to expect for the robot and the person himself or herself, using the observation sensor data, based on the free energy principle.

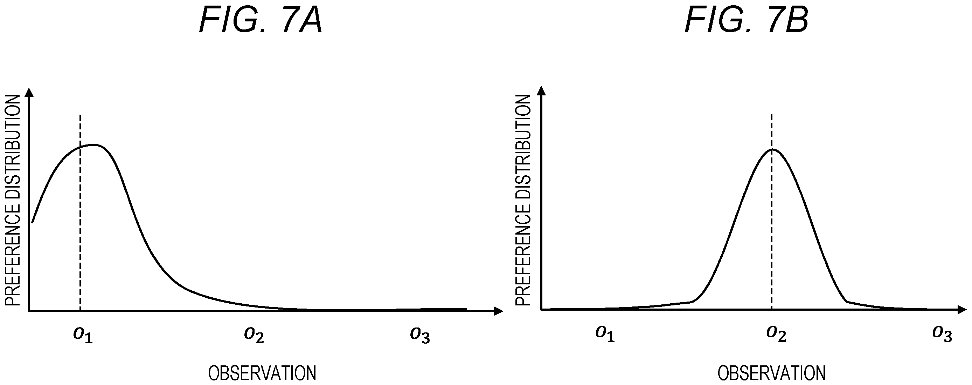

Figs. 7A and 7B are views illustrating the relationship between observations and preference distributions of the person. Incidentally, the observations indicate motions (positions) of the hand of the robot or a hand of the person, which are identified based on the observation sensor data.

For example, when the hand of the robot arm has been at an observation O₁(for example, a start position) from a past time point t-n to the current time point t, the self-region estimation unit 10 identifies this information using the observation sensor data O1ₜ and O2ₜ. Further, the self-region estimation unit 10 estimates that the person desires the position of the hand of the robot to "be at the start position", based on the observation O₁ and the free energy principle. Furthermore, in this case, the self-region estimation unit 10 outputs a preference distribution having a peak (a maximum value) at the observation O₁ (Fig. 7A).

Further, for example, when the hand tip of the person has been at an observation CM for example, at an intermediate position) from the past time point t-n to the current time point t, the self-region estimation unit 10 identifies this information using the observation sensor data O2ₜ. Further, the self-region estimation unit 10 estimates that the person desires the position of the hand tip of the person to "be at the intermediate position", based on the observation O₂ and the free energy principle. Further, in this case, the self-region estimation unit 10 outputs a preference distribution having a peak (a maximum value) at the observation O₂ (Fig. 7B). Furthermore, the self-region estimation unit 10 estimates these preference distributions as the self-region of the person.

Next, there will be described a case where the self-region determination unit 30 calculates preference distributions indicating observations that the robot expects for the person and the robot itself, based on the free energy principle, using the self-region of the person and an intention of the robot, thereby determining the self-region of the robot.

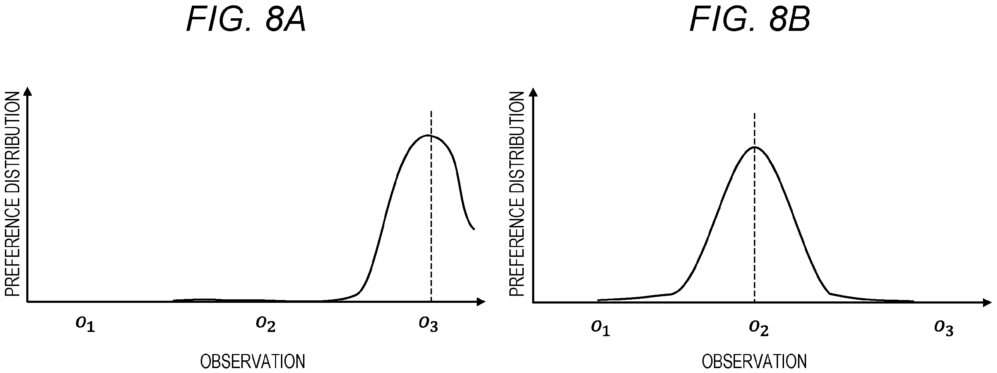

Figs. 8A and 8B are views illustrating the relationship between observations and preference distributions of the robot. The self-region determination unit 30 outputs a preference distribution indicating that the robot desires the position of the hand tip of the person to "be at the end position" (a preference distribution having a peak (a maximum value) at an observation O₃), based on the intention of the robot ("carrying the object from the start position to the end position") (Fig. 8A).

Further, the self-region determination unit 30 derives a conclusion that "moving the object to the intermediate position and releasing the object causes the person to grasp the object at the intermediate position and to carry the object to the end position", using the self-region of the person (the preference of the person for the robot and the person) regarding the observation O₁, namely the fact that the person desires the position of the hand of the robot to "be at the start position", and the observation O₂, namely the fact that the person desires the position of the hand tip of the person to "be at the intermediate position", and using the intention of the robot (the preference of the robot for the person) regarding the observation O₃, namely "being at the end position". In this case, the self-region determination unit 30 outputs a preference distribution having a peak (a maximum value) at the observation O₂, which is a via-point from the observation O₁ to the observation O₃, as a preference distribution for the robot itself indicating the conclusion (Fig. 8B).

As described above, the self-region determination unit 30 determines the self-region of the robot (the preference distributions for the robot itself) in consideration of both the self-region of the person and the intention of the robot, based on the free energy principle. If the preference distribution for the robot itself as described above is reflected on the action (the object is moved to the observation O₂), this serves as an auxiliary line, thereby transferring the observation that the robot expects for the person (being at the end position) to the person. As a result, the person can move, to the end position, the object having been moved to the intermediate position by the robot, thereby achieving the intention of the robot (the goal to be achieved by cooperation between the robot and the person).

### <Description of Control Processing>

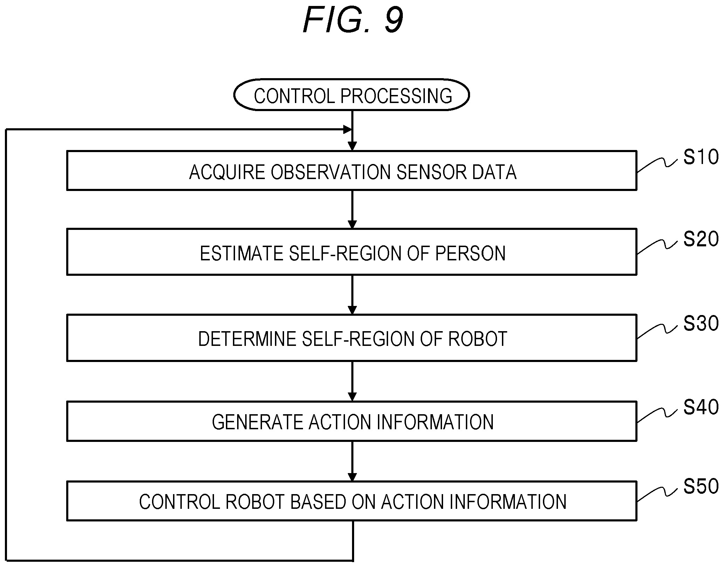

Next, control processing executed by the control device 100 will be described with reference to Fig. 9.

Fig. 9 is a flowchart illustrating an example of control processing. The processing is started at a predetermined timing such as an execution instruction from a person.

If the processing is started, the self-region estimation unit 10 acquires observation sensor data about the robot and the person from the sensors (step S10).

Next, the self-region estimation unit 10 estimates the self-region of the person based on the free energy principle, using the observation sensor data (step S20). Specifically, the self-region estimation unit 10 inputs the observation sensor data to the generative model of the free energy principle, thereby obtaining an output of preference distributions indicating observations that the person is estimated to expect for the robot and the person himself or herself to estimate the preference distributions as the self-region of the person. Incidentally, the self-region estimation unit 10 may estimate the self-region of the person, as illustrated in Figs. 7A and 7B, by calculating the preference distributions of the person by itself, based on the free energy principle, using the observation sensor data.

Next, the self-region determination unit 30 determines the self-region of the robot, based on the free energy principle, using the estimated self-region of the person and an intention of the robot (step S30). Specifically, the self-region determination unit 30 inputs the self-region of the person and the intention of the robot to the generative model of the free energy principle, thereby obtaining an output of preference distributions indicating observations that the robot expects for the person and the robot itself to determine the preference distributions as the self-region of the robot. Incidentally, the self-region determination unit 30 may determine the self-region of the robot, as illustrated in Figs. 8A and 8B, by calculating the preference distributions of the robot by itself, based on the free energy principle, using the self-region of the person and the intention of the robot.

Next, the action generation unit 40 generates action information about the robot (step S40). Specifically, the action generation unit 40 generates an action (action information), based on the free energy principle, in such a way as to approach the preference distribution for observations regarding the robot (the hand position, the hand posture, the amount of opening/closing of the hand, and the contact sensor illustrated in Fig. 4A), which is the self-region of the robot. Specifically, the action generation unit 40 calculates a distribution of actions as illustrated in Fig. 3B, and stochastically selects an action based on the distribution. In the example illustrated in Fig. 3B, an action of "moving to the start position and grasping an object" is selected with a highest probability.

Next, the action generation unit 40 controls the robot based on the action information (step S50). Specifically, the action generation unit 40 controls the operation of the driving device for the robot such as an actuator, using the generated action information, thereby controlling the operation of the robot for realizing the goal to be achieved by cooperation between the robot and the person.

Furthermore, after executing the processing in the step S50, the action generation unit 40 returns the processing to the step S10.

The control processing executed by the control device 100 has been described above.

With the control device as described above, it is possible to control the autonomous system such that the autonomous system can cooperate with a first-time partner and can perform assertive actions. In particular, the control device obtains the self-region of the person for a goal to be achieved by cooperation between the robot and the person, and determines the self-region of the robot in consideration of both the self-region of the person and the intention of the robot. Accordingly, the control device can control the operation of the robot such that the robot can perform not only passive actions meeting expectations of the partner (person) but also assertive actions including active actions.

### <First Modification>

Next, a modification of the aforementioned embodiment will be described. A control device 100 according to the first modification generates screen information about a user interface (UI) screen indicating a self-region of a person and a self-region of a robot, and displays the screen information on a predetermined display device (for example, a display device which is mounted on the robot and can be visually recognized by the person).

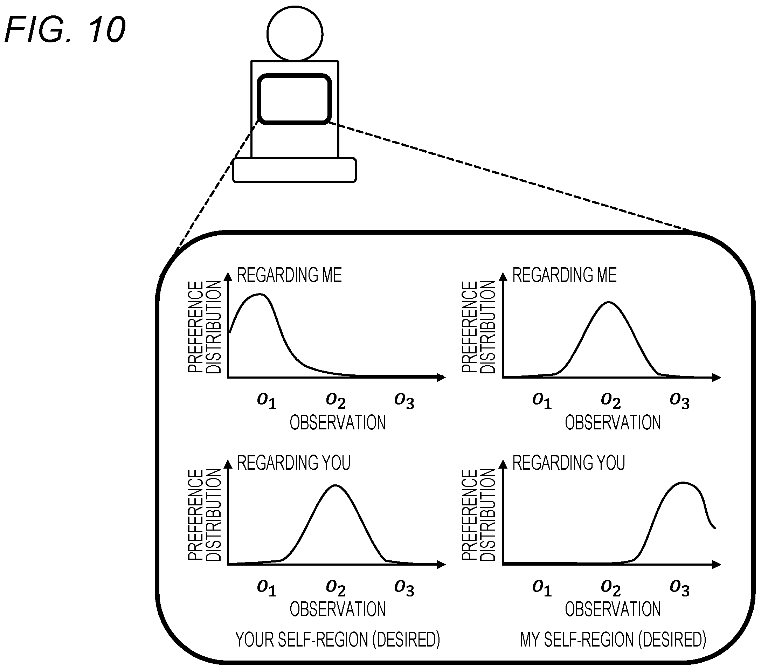

Fig. 10 is an explanatory view of the first modification. As illustrated in the figure, the robot incorporates the display device at a position where it can be visually recognized by the person (for example, a front body portion or the like). The action generation unit 40 generates screen information indicating the preference distributions indicating the self-region of the person estimated in the aforementioned step S20 and/or the preference distributions indicating the self-region of the robot determined in the step S30, and displays the screen information on the display device.

With the control device as described above, it is possible to present the preference distributions corresponding to the estimated self-region of the person and the preference distributions corresponding to the self-region of the robot determined according to the self-region of the person, for the partner (person) of the cooperative work. This enables the person to confirm the preference distributions for observations estimated for the robot and the person himself/herself, and the preference distributions of the robot for the person or the robot itself, thereby enabling the person to easily communicate with the robot regarding the work. In particular, since the person is enabled to know the preferences of the person estimated by the robot and the preferences of the robot itself, the person can work smoothly in cooperation with the robot.

Incidentally, the action generation unit 40 may generate action information (for example, pointing the hand to an observation O₃) for explicitly requesting cooperation, in such a way as to approach the preference distribution that the robot expects for the person. Alternatively, the action generation unit 40 may generate action information (for example, outputting voice information of "is your self-region displayed correct?") for confirming whether the estimated self-region of the person matches the preference for observations which is actually considered by the person. Further, the action generation unit 40 may generate text information (for example, "please grasp the object at an intermediate position", "please move the object to the end position and release the object", and the like) specifying specific observations indicated by the preference distributions, instead of displaying the self-region (the preference distributions) of the robot, and cause the display device to display the text information.

Through the processing as described above, the control device can more clearly inform the person of states and the like that the robot expects for the person.

### <Second Modification>

A control device 100 according to the second modification determines whether or not an estimated self-region of a person is correct, based on the result of analysis of observations (for example, a motion, an expression, and the like) of the person acquired by a sensor such as the camera, and then, based on the result of the determination, the control device 100 updates a generative model of the free energy principle.

Specifically, after the processing in the aforementioned step S50, a self-region estimation unit 10 determines whether or not the estimated self-region of the person is correct, based on the result of an image analysis by a predetermined functional unit (a functional unit for performing image analysis) (not illustrated). For example, in a case where the result of the image analysis indicates a state where the robot and the person cannot cooperate with each other in working in cooperation between the robot and the person, or the like, the self-region estimation unit 10 determines that the estimation of the self-region of the person is incorrect. In this case, the self-region estimation unit 10 changes the values of the components used for the estimation, in the generative model of the free energy principle, thereby updating the generative model of the free energy principle, such that the self-region of the person is correctly estimated thereby.

Through the updating processing as described above, it is possible to increase the accuracy of calculation of the preference distributions corresponding to habits of motions of the person, depending on the person to perform the cooperative work. This enables the control device to estimate the self-region of the person with further improved accuracy.

### [Second Embodiment]

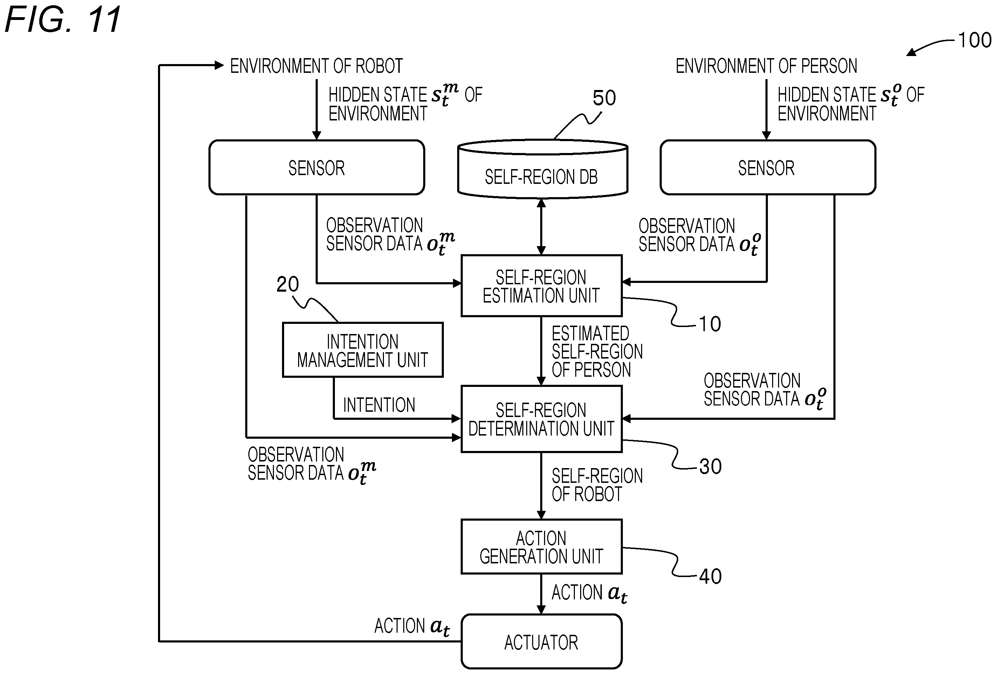

Fig. 11 is a view illustrating an example of a schematic structure of a control device 100 according to the second embodiment. The same structures and functions as those of the first embodiment are denoted by the same reference numerals.

As illustrated in the figure, the control device 100 includes a self-region database (DB) 50. Further, a self-region estimation unit 10 preliminarily stores, in the database, the estimated self-regions of persons with whom a robot has performed cooperative works before, namely information about the observation sensor data of these persons in association with their estimated self-regions. When a next cooperative work is performed, the self-region estimation unit 10 extracts and uses the self-region of the corresponding person from the database. Specifically, the self-region estimation unit 10 identifies preference distributions corresponding to the observation sensor data acquired in performing a cooperative work again, from a self-region extracted from the database. Thus, the self-region estimation unit 10 sets the preference distributions as the self-region of the person. This enables the self-region estimation unit 10 to omit the processing for estimating the self-region from the beginning, based on the observation sensor data and the free energy principle.

Incidentally, the self-region DB 50 is not necessarily included in the control device 100, and may be stored in, for example, a cloud server or the like communicably connected to the control device 100 through a network.

With the control device 100 as described above, it is possible to omit the processing for estimating the self-region of the person (the aforementioned step S20), which shortens the time required for the processing, thereby enabling advancing the cooperative work more quickly.

### [Third Embodiment]

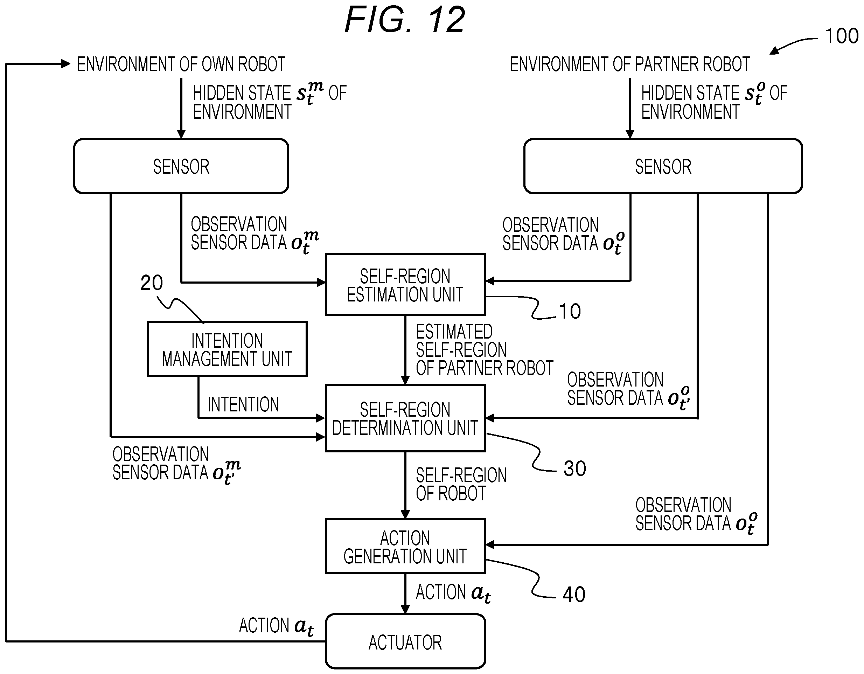

Fig. 12 is a view illustrating an example of a schematic structure of a control device 100 according to a third embodiment. The same structures and functions as those of the aforementioned embodiments are denoted by the same reference numerals.

As illustrated in the figure, in the third embodiment, a robot (hereinafter, referred to as "own robot") controlled by the control device 100 performs a cooperative work with a partner who is not a person but a robot (hereinafter, referred to as "partner robot"). The control device 100 identifies an action form of the partner robot. Incidentally, the action form is a method (modal) for outputting an action, such as a voice, an arm operation, or light, for example. The control device 100 controls the action of the own robot according to the identified modal of the partner robot.

Specifically, an action generation unit 40 acquires observation sensor data of the partner robot, and identifies an action form supported by the partner robot, such as a voice, an arm operation, or light, for example. For example, in a case where the partner robot incorporates a microphone, a speaker, an optical notification sensor, or the like, the action generation unit 40 in the control device 100 can identify the action form of the partner robot based on the observation sensor data.

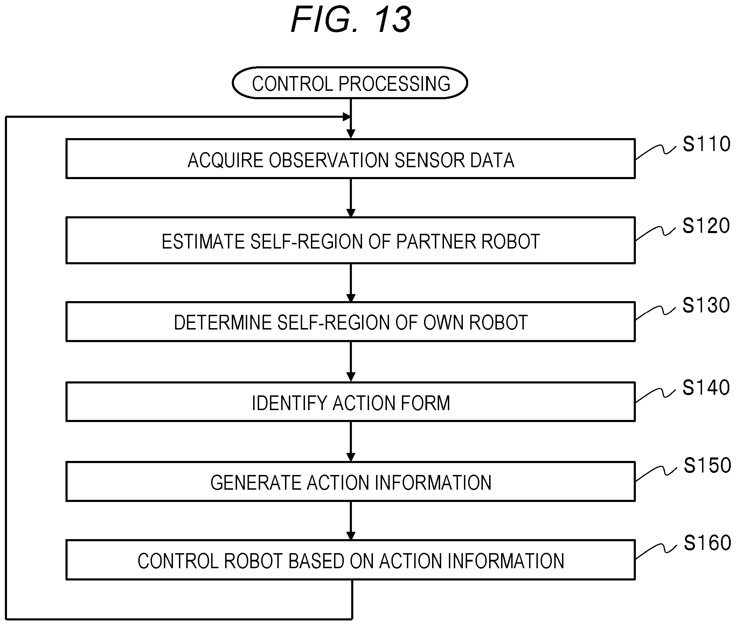

Fig. 13 is a flowchart illustrating an example of control processing according to the third embodiment. If the processing is started, a self-region estimation unit 10 acquires observation sensor data from sensors for the own robot and the partner robot (step S110). Further, the self-region estimation unit 10 estimates the self-region of the partner robot, based on the free energy principle, using the observation sensor data (step S120).

Further, a self-region determination unit 30 determines the self-region of the own robot, based on the free energy principle, using the estimated self-region of the partner robot and an intention of the own robot (step S130) .

Further, the action generation unit 40 identifies an action form supported by the partner robot, based on the observation sensor data of the partner robot (step S140).

Furthermore, the action generation unit 40 generates action information based on the determined self-region (step S150). For example, in a case where the self-region of the own robot is "moving the partner robot", the action generation unit 40 generates action information in consideration of the identified action form of the partner robot, and controls the own robot based on the action information (step S160). For example, in a case where the action form of the partner robot is identified as supporting voices, the action generation unit 40 generates action information which defines outputting of a voice as a method for outputting the action information, and controls the own robot therewith. Specifically, the action generation unit 40 generates action information of "outputting a voice saying, "please move"", for example, and controls the own robot in such a way as to output a voice from a speaker mounted on the own robot, based on the action information.

With the control device as described above, it is possible to generate appropriate action information according to the action form of the partner robot and to control the own robot therewith.

### [Fourth Embodiment]

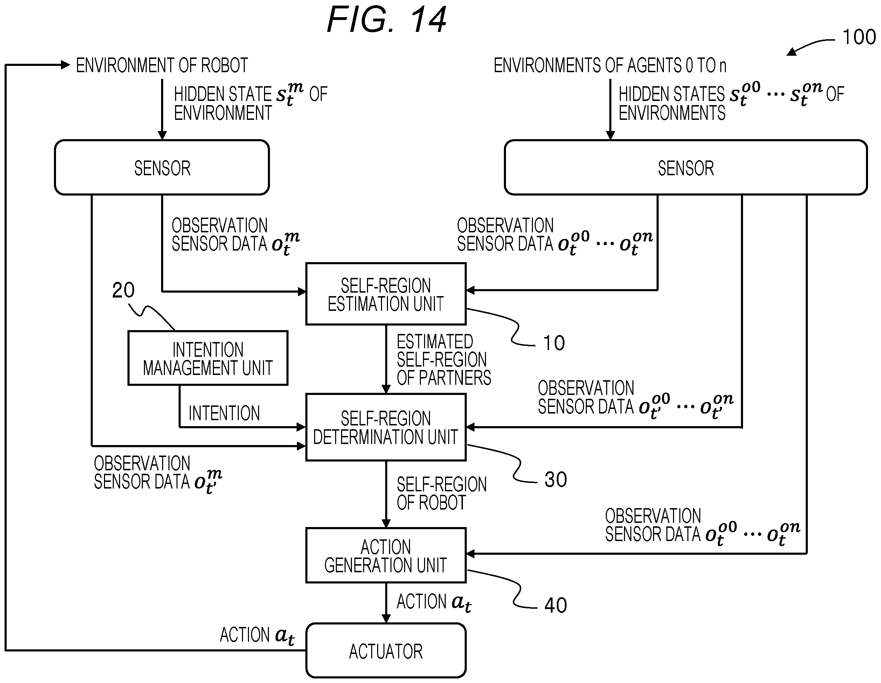

Fig. 14 is a view illustrating an example of a schematic structure of a control device 100 according to a fourth embodiment. The same structures and functions as those of the aforementioned embodiments are denoted by the same reference numerals.

As illustrated in the figure, in the fourth embodiment, a robot controlled by the control device 100 cooperates with partners, who are a plurality of agents (hereinafter, referred to as "partner agents"). Incidentally, the partner agent is a concept covering a person, a robot, and a device, equipment, a system and the like manipulated by a person or a robot.

A self-region estimation unit 10 in the control device 100 estimates the self-region of each agent, using observation sensor data of the partner agents. Specifically, the self-region estimation unit 10 estimates the self-regions of the respective agents, and calculates an overlapping region by superimposing these self-regions on each other to estimate the overlapping region as the self-region of the partner agents.

Further, similarly to in the aforementioned embodiments, a self-region determination unit 30 determines a self-region of the robot, based on the free energy principle, using the estimated self-region of the partner agents and an intention of the robot.

Further, the self-region determination unit 30 identifies a target agent (hereinafter, referred to as an "action target agent") to which the self-region as the preference distribution that the robot expects for itself is to be transmitted, out of the partner agents. Specifically, the self-region determination unit 30 identifies, as the action target agent, an agent having a self-region which is most different from the estimated self-region of the partner agents.

Further, an action generation unit 40 identifies the action form of the action target agent, based on observation sensor data, similarly to in the aforementioned third embodiment. Furthermore, the action generation unit 40 generates action information corresponding to the determined self-region of the robot (the preference distribution that the robot expects for itself) in consideration of the action form and controls the robot therewith.

Hereinafter, there will be described control processing on the assumption that the control device 100 controls a robot for driving a self-driving vehicle and that the robot has an intention of "merging into a lane on which a plurality of vehicles are traveling by being driven by respective persons". In this assumption, hidden states existing in the environment where the robot, the persons, and the vehicles are placed are defined in advance as variables in the free energy principle (or a generative model thereof).

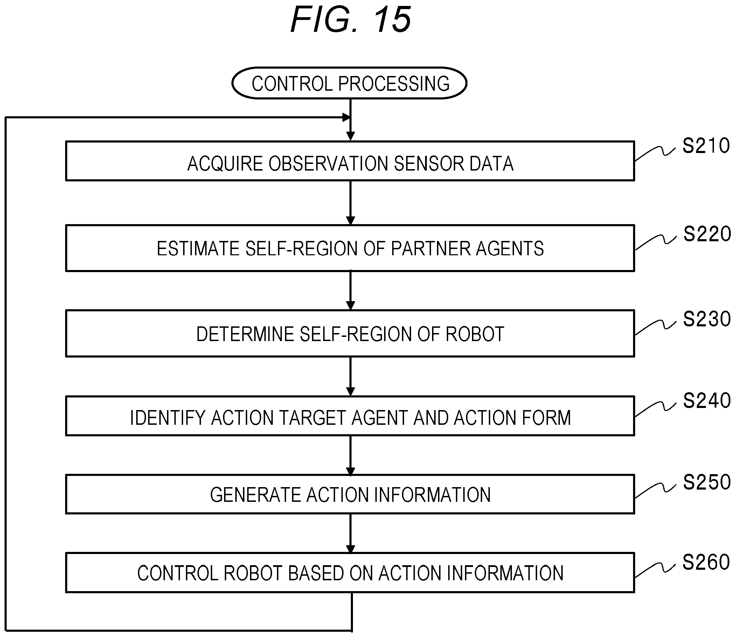

Fig. 15 is a flowchart illustrating an example of control processing according to the present embodiment. If the processing is started, a self-region estimation unit 10 acquires observation sensor data from the robot and the partner agents (step S210). Further, the self-region estimation unit 10 estimates a self-region of the partner agents (preference distributions indicating observations that the plurality of agents are estimated to expect for the robot and the agents themselves), based on the free energy principle, using the observation sensor data (step S220) .

Further, the self-region determination unit 30 determines a self-region of the robot (preference distributions indicating observations that the robot expects for the partner agents and the robot itself), based on the free energy principle, using the estimated self-region of the partner agents and an intention of the robot (step S230).

Next, the self-region determination unit 30 identifies an action target agent, out of the partner agents, based on the magnitude of the difference from the self-region of the partner agents (step S240). For example, the self-region determination unit 30 identifies a vehicle which is not slowing down at the merging point, as the action target agent.

Further, the action generation unit 40 identifies an action form of the action target agent, based on the observation sensor data about the action target agent (step S240). For example, the action generation unit 40 identifies that the action target agent includes a headlight and the driver can recognize a headlight, based on the observation sensor data.

Next, the action generation unit 40 generates action information (step S250). For example, in a case where the self-region of the robot (the preference distribution that the robot expects for the robot itself) indicates "decreasing the speed of the action target agent", the action generation unit 40 generates action information of "blinking the headlight" in consideration of the action form of the action target agent.

Incidentally, the processing for identifying the action form of the action target agent may be performed before the determination of the self-region of the robot (before the step S230). In this case, in order to decrease the speed of the action target agent, the self-region determination unit 30 can derive a self-region of the robot which indicates "blinking the headlight".

Next, the action generation unit 40 controls the robot based on the action information (step S260). For example, the action generation unit 40 controls the robot, in such a way as to cause the headlight to blink, based on the action information.

With the control device as described above, even in a case where a plurality of agents is present, it is possible to determine the self-region of the robot in consideration of the action forms of the partner agents, thereby appropriately controlling the robot.

### <Hardware Structure of Control Device 100>

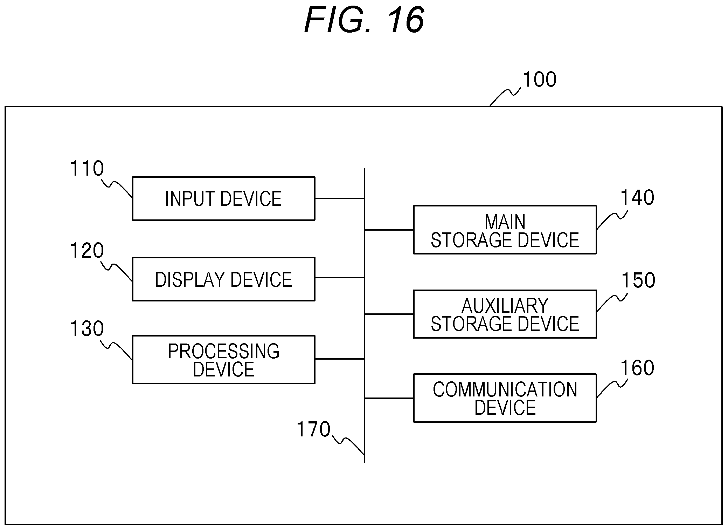

Fig. 16 is a diagram illustrating an example of the hardware structure of the control device 100. As illustrated in the figure, the control device 100 includes an input device 110, a display device 120, a processing device 130, a main storage device 140, an auxiliary storage device 150, a communication device 160, and a bus 170 for electrically connecting these devices to each other.

The input device 110 is an input device such as a touch panel, a keyboard, or a mouse. The display device 120 is a display device such as a liquid crystal display or an organic display.

The processing device 130 is, for example, a processor such as a central processing unit (CPU) or a graphics processing unit (GPU). The main storage device 140 is a memory device (memory resource) such as a random access memory (RAM) or a read only memory (ROM). Incidentally, the control device 100 includes at least one processor and at least one memory resource.

The auxiliary storage device 150 is a non-volatile storage device capable of storing digital information, such as a so-called hard disk (hard disk drive), a solid state drive (SSD), or a flash memory.

The communication device 160 is a wired communication device 160 for performing wired communication through a network cable or a wireless communication device for performing wireless communication through an antenna.

An example of the hardware structure of the control device 100 has been described above.

The self-region estimation unit 10, the self-region determination unit 30, and the action generation unit 40 in the control device 100 as described above are realized by a program for causing the processing device 130 to perform processing. This program is stored in the main storage device 140 or the auxiliary storage device 150, loaded into the main storage device 140 in execution of the program, and executed by the processing device 130.

The program for realizing the self-region estimation unit 10 and the self-region determination unit 30 may integrally incorporate information about definition of the free energy principle and the generative model thereof. Alternatively, the main storage device 140 or the auxiliary storage device 150 may store the information about the definition of the free energy principle and the generative model thereof, separately from the self-region estimation unit 10 and the self-region determination unit 30.

Further, the intention management unit 20 is realized by the main storage device 140, the auxiliary storage device 150, or the combination thereof. Furthermore, the communication device 160 performs communication of information between the self-region estimation unit 10, the self-region determination unit 30, and the action generation unit 40 and the robot and the sensors.

Further, the aforementioned respective structures, functions, processing units, processing means, and the like of the control device 100 may be partially or entirely realized through hardware, by being designed with an integrated circuit, for example. Further, the aforementioned structures and functions may be realized through software by a processor interpreting and executing programs for realizing the respective functions. Information such as programs, tables and files for realizing the respective functions may be stored in a storage device such as a memory, a hard disk, or a solid state drive (SSD), or in a recording medium such as an IC card, an SD card, or a DVD.

Further, the present invention is not limited to the aforementioned embodiments and modifications, and various modifications are included within the scope of the same technical idea. For example, the aforementioned examples have been described in detail, for the purpose of explaining the present invention in such a way as to facilitate understanding the present invention, and the present invention is not necessarily limited to structures including all the described structures. Further, a structure in a certain example can be partially replaced with a structure in another example and, also, a structure in a certain example can be additionally provided with a structure in another example. Further, a structure in each example may be partially eliminated, provided with other additional structures or replaced with other structures.

Further, there have been illustrated control lines and information lines considered to be necessary for description, and not all control lines and information lines necessary for products are illustrated. It may be considered that almost all the structures are connected to each other, in actual.

## Claims

1. A control device comprising:
a self-region estimation unit configured to estimate a self-region of a partner based on preference information indicating an observation that the partner is estimated to expect for a control target and the partner, the preference information being derived based on a predetermined principle and observation sensor data acquired from the partner and the control target, the partner being a person or an autonomous system including a robot, and the control target being an autonomous system including a robot;
a self-region determination unit configured to determine a self-region of the control target based on preference information indicating an observation that the control target expects for the partner and the control target, which is derived based on the predetermined principle, using the self-region of the partner and an intention of the control target as a goal to be achieved by cooperation between the partner and the control target; and
an action generation unit configured to generate action information for controlling an action of the control target based on the self-region of the control target, and to control a driving device for the control target using the action information, thereby controlling an operation of the control target.

2. The control device according to claim 1, wherein the action generation unit is configured to display at least one of the preference information indicating the self-region of the partner and the preference information indicating the self-region of the control target, on a display device visually recognizable by the partner.

3. The control device according to claim 1, wherein the action generation unit is configured to generate the action information for approaching the observation that the control target expects for the partner, based on the self-region of the control target, thereby controlling an operation of the control target based on the action information.

4. The control device according to claim 1, wherein the action generation unit is configured to generate the action information for confirming whether or not the estimated self-region of the partner matches a preference of an observation actually considered by the partner, thereby controlling an operation of the control target based on the action information.

5. The control device according to claim 1, wherein the predetermined principle is a free energy principle.

6. The control device according to claim 5, wherein
the self-region estimation unit is configured to estimate the self-region of the partner using a generative model of the free energy principle, and
the self-region determination unit is configured to determine the self-region of the control target using a generative model of the free energy principle.

7. The control device according to claim 6, wherein the self-region estimation unit is configured to update the generative model based on a result of an analysis using the observation sensor data.

8. The control device according to claim 1, wherein
the self-region estimation unit is configured to store, in a predetermined database, information about the self-region of the partner with which the control target has performed a cooperative work before in association with the observation sensor data used for the estimation of the self-region, and
the self-region estimation unit is configured to estimate a self-region of the partner, using the self-region corresponding to the partner, which is extracted from the database, when a cooperative work is performed with the partner.

9. The control device according to claim 1, wherein
the action generation unit is configured
to identify an action form of the partner based on the observation sensor data, and
to generate action information based on the self-region of the control target, such that the action information corresponds to the identified action form.

10. The control device according to claim 1, wherein
the partner includes a plurality of the persons and/or a plurality of the autonomous systems,
the self-region determination unit is configured to identify an action target agent to which the self-region determined based on the preference information expected by the control target is to be transmitted, out of the persons or the autonomous systems included in the partner, and
the action generation unit is configured to identify an action form of the action target agent based on the observation sensor data, and to generate action information based on the self-region of the control target such that the action information corresponds to the identified action form.

11. A control method performed by a control device,
wherein the control device performs
a self-region estimation step of estimating a self-region of a partner based on preference information indicating an observation that the partner is estimated to expect for a control target and the partner, the preference information being derived based on a predetermined principle and observation sensor data acquired from the partner and the control target, the partner being a person or an autonomous system including a robot, and the control target being an autonomous system including a robot;
a self-region determination step of determining a self-region of the control target based on preference information indicating an observation that the control target expects for the partner and the control target, which is derived based on the predetermined principle, using the self-region of the partner and an intention of the control target as a goal to be achieved by cooperation between the partner and the control target; and
an action generation step of generating action information for controlling an action of the control target based on the self-region of the control target, and controlling a driving device for the control target using the action information, thereby controlling an operation of the control target.

12. A program for causing a computer to function as a control device, the program being configured to cause the computer to function as
a self-region estimation unit configured to estimate a self-region of a partner based on preference information indicating an observation that the partner is estimated to expect for a control target and the partner, the preference information being derived based on a predetermined principle and observation sensor data acquired from the partner and the control target, the partner being a person or an autonomous system including a robot, and the control target being an autonomous system including a robot;
a self-region determination unit configured to determine a self-region of the control target based on preference information indicating an observation that the control target expects for the partner and the control target, which is derived based on the predetermined principle, using the self-region of the partner and an intention of the control target as a goal to be achieved by cooperation between the partner and the control target; and
an action generation unit configured to generate action information for controlling an action of the control target based on the self-region of the control target, and to control a driving device for the control target using the action information, thereby controlling an operation of the control target.
